(19) Europäisches Patentamt
European Patent Office
Office européen des brevets

(11) **EP 4 576 346 A1**

(12) **EUROPEAN PATENT APPLICATION**

(43) Date of publication:
**25.06.2025 Bulletin 2025/26**

(21) Application number: **24207245.2**

(22) Date of filing: **17.10.2024**

(51) International Patent Classification (IPC):
*H01M 50/107* (2021.01)  *H01M 50/152* (2021.01)
*H01M 50/186* (2021.01)  *H01M 50/342* (2021.01)
*H01M 50/184* (2021.01)

(52) Cooperative Patent Classification (CPC):
**H01M 50/107; H01M 50/103; H01M 50/15;**
**H01M 50/152; H01M 50/184; H01M 50/186;**
**H01M 50/3425;** H01M 2200/20; H01M 2220/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.12.2023  CN 202323459472 U**
**18.12.2023  CN 202323460665 U**
**18.12.2023  CN 202311750467**
**07.08.2024  PCT/CN2024/110386**

(71) Applicant: **Eve Energy Co., Ltd.**
**Huizhou, Guangdong 516006 (CN)**

(72) Inventors:
• **LI, Jidong**
**Huizhou, Guangdong, 516006 (CN)**
• **FU, Zhibo**
**Huizhou, Guangdong, 516006 (CN)**
• **WANG, Xingjian**
**Huizhou, Guangdong, 516006 (CN)**
• **SONG, Pengyuan**
**Huizhou, Guangdong, 516006 (CN)**

(74) Representative: **Murgitroyd & Company**
**165-169 Scotland Street**
**Glasgow G5 8PL (GB)**

(54) **BATTERY AND BATTERY MODULE**

(57)    The disclosure provides a battery (1000) and a battery module. The battery (1000) includes a battery housing (100) and a cap assembly (200); the battery housing (100) includes a body (1), and the body (1) includes a side wall (11) extending in a first direction and an end wall (12) connected to an end of the side wall (11); the end wall (12) includes a first surface (121) and a second surface (122) opposite to each other in the first direction, and the first surface (121) faces an explosion-proof sheet (4) of the cap assembly (200); and the end wall (12) is provided with a groove (2) on the second surface (122), and the groove (2) is recessed from the second surface (122) towards the first surface (121).

EP 4 576 346 A1

**Description**

TECHNICAL FIELD

The disclosure relates to the field of battery, and in particular, to a battery and a battery module.

BACKGROUND

In related art, in order to release the pressure inside a battery in time during thermal runaway, an explosion-proof valve is disposed close to the end portion of the battery. When the pressure inside the battery is too high, the high-pressure gas inside the battery will break through the explosion-proof valve to achieve pressure relief, so as to avoid causing safety accidents.

SUMMARY

For the situation where the pressure inside the battery increases sharply, when the explosion-proof valve fails to release pressure in time, there may be an explosion risk of a housing of the battery caused by high pressure inside the battery.
In a first aspect, some embodiments of the disclosure provide a battery, including:

a battery housing including a body, in which the body includes a side wall extending in a first direction and an end wall connected to an end of the side wall; and

a cap assembly disposed at an end of the side wall away from the end wall and including an explosion-proof sheet, in which the explosion-proof sheet is disposed facing the end wall;

in which the end wall includes a first surface and a second surface opposite to each other in the first direction, and the first surface faces the explosion-proof sheet; the end wall is provided with a groove on the second surface, and the groove is recessed from the second surface towards the first surface; and a vertical distance from a deepest point of the groove to the first surface in the first direction is defined as D, and D satisfies the following relationship: $0.03\,\text{mm} \leq D \leq 0.08\,\text{mm}$.

In a second aspect, some embodiments of the disclosure provide a battery module including a plurality of batteries, and each of the plurality of batteries adapts the battery as described above.
In the embodiments of the disclosure, the groove is provided on the end wall of the body, and the groove and the explosion-proof sheet are respectively disposed at two ends of the battery housing in the first direction. When the battery undergoes thermal runaway and the pressure inside the battery is too high, the battery will collapse at the groove on the end wall and the explosion-proof sheet, and the high-pressure gas inside the battery can be released from both of the end wall and the explosion-proof sheet to outside of the battery, thereby improving the pressure relief performance of the battery during thermal runaway, and reducing the explosion risk of the battery during thermal runaway.

BRIEF DESCRIPTION OF THE DRAWINGS

FIG. 1 is a schematic cross-sectional view of a battery provided in some embodiments of the disclosure.

FIG. 2 is a schematic cross-sectional view of a cap assembly provided in some embodiments of the disclosure.

FIG. 3 is a schematic structural view of an explosion-proof sheet provided in some embodiments of the disclosure.

FIG. 4 is a schematic enlarged view at position A in FIG. 1.

FIG. 5 is a schematic enlarged view at position B in FIG. 1.

FIG. 6 is a schematic structural view of an end wall provided in some embodiments of the disclosure.

FIG. 7 is another schematic structural view of an end wall provided in some embodiments of the disclosure.

FIG. 8 is a schematic view of a battery housing and a current collecting plate after assembly provided in some embodiments of the disclosure.

FIG. 9 is a schematic local cross-sectional view of the battery provided in some embodiments of the disclosure.

FIG. 10 is another schematic local cross-sectional view of the battery provided in some embodiments of the disclosure.

FIG. 11 is a schematic cross-sectional view of a sealing member provided in some embodiments of the disclosure.

FIG. 12 is a schematic cross-sectional view of the battery housing and a cap main body after assembly provided in some embodiments of the disclosure.

Reference characters:

1000, battery; 100, battery housing; 1, body; 11, side wall; 12, end wall; 12A, first region; 12B, second region; 1A, first sub-region; 1B, second sub-region; 2, groove; 3, current collecting plate; 200, cap assembly; 4, explosion-proof sheet; 5, notch; 121, first surface; 122, second surface; 21, first groove wall; 22, second groove wall; 23, third groove wall; 2A, first side; 2B, second side; 6, cap main body; 11A, main body portion; 12C, port portion; 2C, end surface; 3A, sealing member; 31, embedding portion; 32, convex portion; 6, cap main body; 5A, cavity; 6A, sealing region; and 41A, pressure-bearing surface.

DETAILED DESCRIPTION

In the description of the disclosure, unless otherwise specified or limited, the terms "connected", "connection", and "fixed" should be understood broadly. For example, it can be a fixed connection, a detachable connection, or an integrated unit; alternatively, it can be a mechanical connection or an electrical connection; alternatively, it can be a direct connection or an indirect connection through an intermediate medium; and alternatively, it can be an internal connection of two components or an interaction relationship between two components. For an ordinary person skilled in the art, specific meanings of the above terms in the disclosure can be understood based on specific situations.

In the disclosure, unless otherwise specified or limited, "a first feature above or below a second feature" may include a direct contact between the first feature and the second feature, or an indirect contact through another feature between the first feature and the second feature, instead of the direct contact. Moreover, the first feature is disposed "on" or "above" the second feature, indicating that the first feature is directly above or diagonally above the second feature, or simply indicating that the first feature is horizontally higher than the second feature. The phrase "the first feature is disposed below or under the second feature" indicates that the first feature is directly below or diagonally below the second feature, or simply indicates that the first feature is horizontally lower than the second feature.

In the description of the disclosure, directional or positional relationships indicated by the terms "on", "above", "below", "front", "back", "left", "right", and the like, are based on the directional or positional relationships shown in the drawings, which are used only for the convenience of describing the disclosure and simplifying the description, rather than indicating or implying that the devices or elements must have a specific direction, be constructed or operated in a specific direction. Therefore, the terms cannot be interpreted as a limitation on the disclosure. In addition, the terms "first" and "second" are used only for the purpose of description and do not have specific meanings.

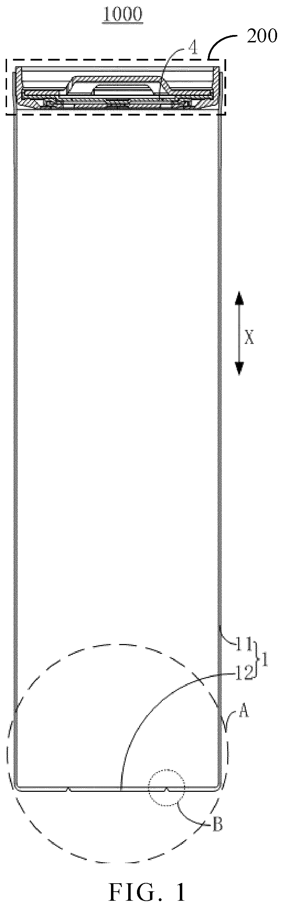

As illustrated in FIG. 1, FIG. 4, FIG. 5, and FIG. 8, some embodiments of the disclosure provide a battery 1000 including a battery housing 100 and a cap assembly 200. The battery housing 100 includes a body 1, and the body 1 includes a side wall 11 extending in a first direction X and an end wall 12 connected to an end of the side wall 11. The cap assembly 200 is disposed at an end of the side wall 11 away from the end wall 12. The cap assembly 200 includes an explosion-proof sheet 4 disposed facing the end wall 12. The end wall 12 includes a first surface 121 and a second surface 122 disposed opposite to each other in the first direction X, and the first surface 121 faces the explosion-proof sheet 4. The end wall 12 is provided with a groove 2 on the second surface 122, and the groove 2 is recessed from the second surface 122 towards the first surface 121. A vertical distance from a deepest point of the groove 2 to the first surface 121 in the first direction X is defined as D, and D satisfies the following relationship: $0.03 \text{ mm} \leq D \leq 0.08 \text{ mm}$.

In the embodiments of the disclosure, the groove 2 is provided on the end wall 12 of the body 1, and the groove 2 and the explosion-proof sheet 4 are respectively disposed at two ends of the battery housing 100 in the first direction X. When the battery 1000 undergoes thermal runaway and the pressure inside the battery 1000 is too high, the battery 1000 will collapse at the groove 2 on the end wall 12 and the explosion-proof sheet 4, and the high-pressure gas inside the battery 1000 can be released from both of the end wall 12 and the explosion-proof sheet 4 to outside of the battery 1000, thereby improving the pressure relief performance of the battery 1000 during thermal runaway, and reducing the explosion risk of the battery 1000 during thermal runaway.

It can be understood that, when D is less than 0.03 mm, during thermal runaway, there may be a risk of insufficient structural strength at the end wall 12 of the battery housing 100. Furthermore, it may occur that the explosion-proof sheet 4 has not collapsed but the groove 2 has collapsed, causing pressure relief from one end, which may result in the explosion of the battery housing 100. Moreover, when D is less than 0.03 mm, it is easy to cause cracking of the end wall 12 during processing and forming the groove 2 on the end wall 12. When D is greater than 0.08 mm, during thermal runaway, the battery 1000 may collapse at the explosion-proof sheet 4, but the battery 1000 does not collapse at the groove 2, and thus, the gas inside the battery 1000 can be released from the explosion-proof sheet 4, not the end wall 12, which may result in the explosion of the battery housing 100.

In addition, a vertical distance D from the deepest point of the groove 2 to the first surface 121 in the first direction X is set in a range of 0.03 mm to 0.08 mm, so as to meet design requirements that when the pressure inside the battery 1000 reaches between 1.90 MPa and 3.15 MPa, the battery 1000 collapses at both of the explosion-proof sheet 4 and the end wall 12 to release the high-pressure gas inside the battery 1000. It should be noted that, in some embodiments of the disclosure, when the pressure inside the battery 1000 reaches between 1.90 MPa and 2.73 MPa, the battery 1000 may collapse at the explosion-proof sheet 4. Moreover, during thermal runaway, when the pressure inside the battery 1000 is greater than 2.73 MPa, the battery 1000 may collapse at the explosion-proof sheet 4 either. For the structural design with the groove 2 provided on the end wall 12, when D satisfies the following relationship: 0.03 mm $\leq$ D $\leq$ 0.08 mm, and the pressure inside the battery 1000 reaches between 1.90 MPa and 3.15 MPa, the battery 1000 may collapse at the end wall 12.

In some embodiments of the disclosure, when the pressure inside the battery 1000 reaches between 2.70 MPa and 3.15 MPa, the battery 1000 may collapse at the end wall 12. The gas inside the battery 1000 may be released from the explosion-proof sheet 4 before the pressure reaches between 1.90 MPa and 2.70 MPa, at which the battery 1000 may not collapse at the end wall 12, so as to avoid the end wall 12 of the battery housing 100 being damaged and causing danger. When the pressure inside the battery 1000 is high, that is, between 2.70 MPa and 3.15 MPa, the pressure can be released from the explosion-proof sheet 4 and the end wall 12 together to avoid danger caused by the damage to the battery housing 100.

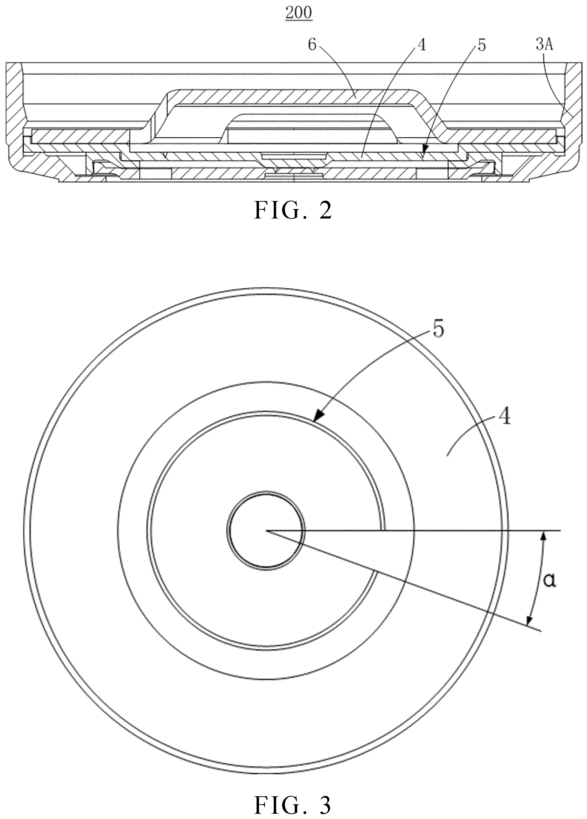

As illustrated in FIG. 2, in some embodiments of the disclosure, the cap assembly 200 includes a sealing member 3A, and the explosion-proof sheet 4 is disposed in a space enclosed by the sealing member 3A.

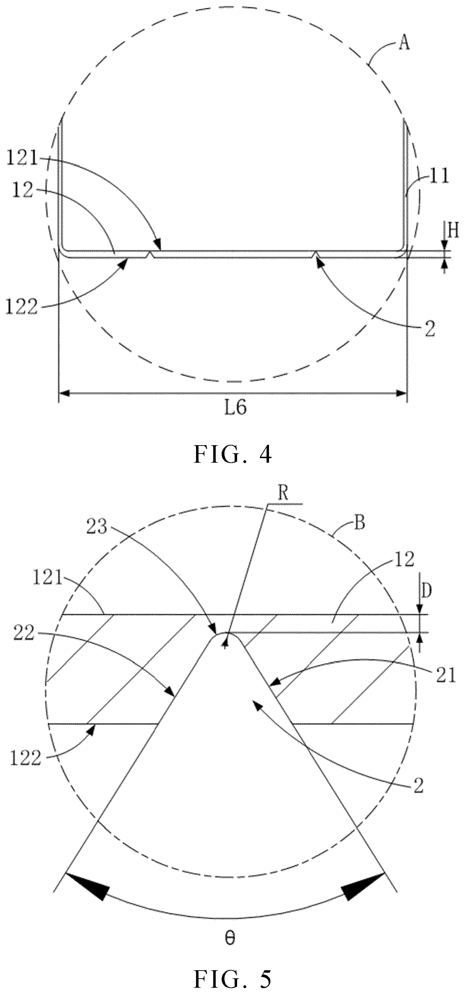

As illustrated in FIG. 5, in some embodiments of the disclosure, the groove 2 is in an arc shape on the second surface 122, and the groove 2 includes a first groove wall 21 and a second groove wall 22 disposed in a radial direction of a circle where the arc shape of the groove 2 is located. In a cross-sectional view of the battery 1000, both of the first groove wall 21 and the second groove wall 22 are inclined surfaces, and a plane where the first groove wall 21 is located intersects with a plane where the second groove wall 22 is located. An angle in the first direction X between the plane where the first groove wall 21 is located and the plane where the second groove wall 22 is located is defined as $\theta$, and $\theta$ satisfies the following relationship: 25° $\leq \theta \leq$ 65°. With this setting, on the basis of the same opening size of the groove 2, an area of a bottom of the groove 2 can be reduced, and thus a collapse area of the battery housing 100 at the groove 2 during pressure relief of the battery housing 100 can be reduced.

In some embodiments of the disclosure, the groove 2 further includes a third groove wall 23 connecting the first groove wall 21 and the second groove wall 22, and the deepest point of the groove 2 is located on the third groove wall 23. In the cross-sectional view of the battery 1000, the third groove wall 23 is in a circular arc shape, and a circle center of a circle corresponding to the circular arc shape of the third groove wall 23 is located in the groove 2. A radius of the circle corresponding to the circular arc shape of the third groove wall 23 is defined as R, and R satisfies the following relationship: 0.05 mm $\leq$ R $\leq$ 0.1 mm. In related art, a head of a stamping die for processing the groove 2 is designed as a rounded corner. In the embodiments, during stamping of the stamping die, by using the stamping die with the head having a radius of 0.05 mm to 0.1 mm, the third groove wall 23 with the radius of the circle corresponding to the circular arc shape of the third groove wall 23 in the range of 0.05 mm to 0.1 mm can be formed. Moreover, the head of the stamping die for processing the groove 2 is designed as the rounded corner, so as to avoid damage to part of the end wall 12 to be stamped during the stamping process, and also to prevent a groove width of the groove 2 from being too large after stamping.

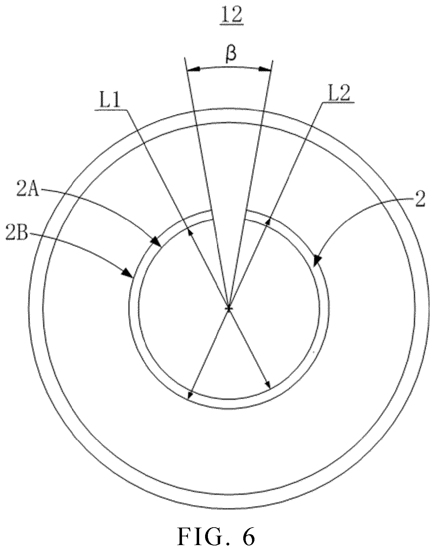

As illustrated in FIG. 2 and FIG. 3, in some embodiments of the disclosure, the explosion-proof sheet 4 is provided with a notch 5. The notch 5 is in an arc shape on the explosion-proof sheet 4, an angle on the explosion-proof sheet 4 between two connecting lines connecting two ends of the notch 5 and a circle center of a circle where the arc shape of the notch 5 is located is defined as $\alpha$, and $\alpha$ satisfies the following relationship: 0° $\leq \alpha \leq$ 22°. As illustrated in FIG. 6, the groove 2 is in an arc shape on the second surface 122, an angle on the second surface 122 between two connecting lines connecting two ends of the groove 2 and a circle center of a circle where the arc shape of the groove 2 is located is defined as $\beta$, and $\beta$ satisfies the following relationship: 0° $\leq \beta \leq$ 22°. In the embodiments, the angle $\alpha$ between two connecting lines connecting two ends of the notch 5 and the circle center of the circle where the arc shape of the notch 5 is located, and the angle $\beta$ between two connecting lines connecting two ends of the groove 2 and the circle center of the circle where the arc shape of the groove 2 is located, are both in the range of 0° to 22°, which can improve the consistency of pressure relief at two ends of the battery 1000 in the first direction X, thereby enhancing the uniform exhaust and pressure relief effects of the battery 1000. It can be understood that, when $\alpha$ is a fixed value in the range of 0° to 22°, $\beta$ can be any value in the range of 0° to 22° to design the size of the groove 2; and when $\beta$ is a fixed value in the range of 0° to 22°, $\alpha$ can be any value in the range of 0° to 22° to design the size of the notch 5.

In some embodiments of the disclosure, $\alpha$ is in the range of 18° to 22°, that is, $\alpha$ satisfies the following relationship: $18° \leq \alpha \leq 22°$; and $\beta$ is in the range of 0° to 22°, that is, $\beta$ satisfies the following relationship: $0° \leq \beta \leq 22°$.

In some embodiments of the disclosure, the notch 5 and the groove 2 are disposed facing each other in the first direction X, which can further improve the consistency of the pressure relief at two ends of the battery 1000 in the first direction X to the high-pressure gas inside the battery 1000, and avoid the explosion of the battery housing 100 when the battery 1000 undergoes thermal runaway and the pressure in the battery 1000 is released.

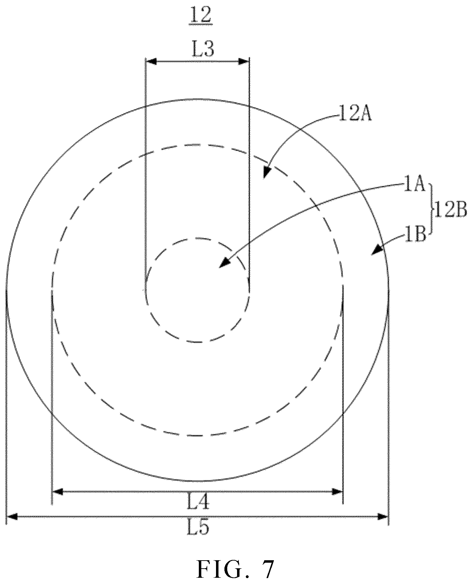

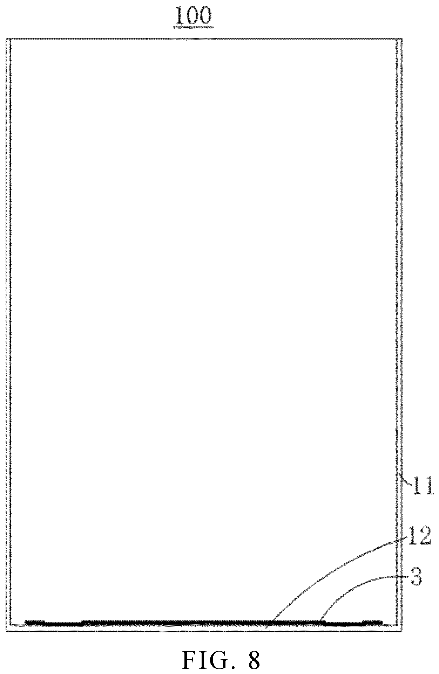

As illustrated in FIG. 7 and FIG. 8, the end wall 12 includes a first region 12A and a second region 12B, and the second region 12B is configured to be welded with a current collecting plate 3. At least part of the groove 2 is disposed in the first region 12A. Since a thickness of part of the end wall 12 provided with the groove 2 in the first direction X is smaller than a thickness of the end wall 12 without the groove 2, and the current collecting plate 3 needs to be welded to the end wall 12 during the assembly and forming of the battery 1000, in order to avoid the thinner thickness of the end wall 12 at the groove 2 in the first direction X affecting the welding of the current collecting plate 3, and to avoid welding through the end wall 12 where the groove 2 is provided when welding the current collecting plate 3 and the end wall 12, in the embodiments, at least part of the groove 2 is misaligned with the welding position of the current collecting plate 3 and the end wall 12. For this, at least part of the groove 2 is disposed in the first region 12A, and the welding region of the current collecting plate 3 and the end wall 12 is disposed in the second region 12B.

It can be understood that the current collecting plate 3 is welded to part of the end wall 12 in the second region 12B. Therefore, part of the groove 2 can be disposed in a region of the second region 12B where the current collecting plate 3 is not welded to the end wall 12. However, because welding position of the current collecting plate 3 in the second region 12B is not fixed, in order to make the groove 2 suitable to the production processes of different welding methods for the current collecting plate 3, in some embodiments of the disclosure, the entirety of the groove 2 is located in the first region 12A.

In addition, a welding method for welding the current collecting plate 3 and the end wall 12 includes spot welding, wire welding, or the like. In some embodiments, when part of the groove 2 is located in the second region 12B, the welding position of the current collecting plate 3 and the end wall 12 is misaligned with the groove 2.

In some embodiments of the disclosure, the second region 12B includes a first sub-region 1A and a second sub-region 1B, and the first region 12A is located between the first sub-region 1A and the second sub-region 1B. In the embodiments, the welding region of the current collecting plate 3 and the end wall 12 includes two different regions located on the end wall 12, that is, the first sub-region 1A and the second sub-region 1B. Since the first region 12A is located between the first sub-region 1A and the second sub-region 1B, on the basis of meeting the welding requirement for the end wall 12 and the current collecting plate 3, at least part of the groove 2 is located in the first region 12A, so as to avoid the end wall 12 from being welded through when the current collecting plate 3 is welded to the end wall 12.

In some embodiments, the welding region of the current collecting plate 3 is located only in the first sub-region 1A. In some embodiments, the welding region of the current collecting plate 3 is located only in the second sub-region 1B. In some embodiments, the welding region of the current collecting plate 3 includes both of the first sub-region 1A and the second sub-region 1B. The groove 2 can be designed to avoid the first sub-region 1A and the second sub-region 1B, so that the battery housing 100 is suitable to different welding methods for the current collecting plate 3 during the production processes, thereby improving the universality of the battery housing 100.

In some embodiments of the disclosure, the first sub-region 1A is in a circular shape, the second sub-region 1B is in an annular shape, and the groove 2 is in an arc shape on the second surface 122. As illustrated in FIG. 6, in a plan view of the end wall 12, the groove 2 includes a first side 2A and a second side 2B oppositely disposed in a radial direction of the circle where the arc shape of the groove 2 is located, and both of the first side 2A and the second side 2B are in an arc shape. A diameter of a circle where the arc shape of the first side 2A is located is defined as L1, a diameter of a circle where the arc shape of the second side 2B is located is defined as L2, a diameter of the first sub-region 1A is defined as L3, and an inner diameter of the second sub-region 1B is defined as L4, and L1, L2, L3, and L4 satisfy the following relationship:

$$L3 \leq \frac{1}{2}(L1+L2) \leq L4$$

. It can be understood that, the first sub-region 1A is in a circular shape, the second sub-region 1B is in an annular shape, and the groove 2 is in an arc shape on the second surface 122, that is, the diameter of the circle where the arc shape of the groove 2 is located is between the diameter L3 of the first sub-region 1A and the inner diameter L4 of the second sub-region 1B, which can avoid the interference of the groove 2 on the welding of the current collecting plate 3 and the end wall 12. Moreover, since the groove 2 includes the first side 2A and the second side 2B oppositely disposed in the radial direction of the circle where the arc shape of the groove 2 is located, $\frac{1}{2}$ $(L1+L2)$ is half of the shortest linear distance between the first side 2A and the second side 2B in the radial direction of the circle where the arc shape of the groove 2 is located, so that the groove 2 on the end wall 12 does not interfere with the welding of the end wall 12 and the current collecting plate 3, which is in the second region 12B including the first sub-region 1A and the second sub-region 1B.

In some embodiments of the disclosure, L3 and L4 satisfy the following relationship: $2 \text{ mm} \leq L3 \leq 6 \text{ mm}$, and $L4 \geq 12 \text{ mm}$. That is, a size range of L3 is the welding range between the current collecting plate 3 and the end wall 12 in the first sub-region 1A, and a size range of L4 is the welding range between the current collecting plate 3 and the end wall 12 in the second sub-region 1B. In some embodiments, an outer diameter of the second sub-region 1B is defined as L5, and L5 satisfies the following relationship: $L5 \leq 15 \text{ mm}$. That is, the size range of 12mm to 15mm is the welding range between the current collecting plate 3 and the end wall 12 in the second sub-region 1B. In some embodiments of the disclosure, L1 and

$$6 \text{ mm} \leq \frac{1}{2} (L1+L2) \leq 12 \text{ mm}$$

L2 satisfy the following relationship: , so that at least part of the groove 2 is located in the first region 12A, avoiding the interference of the groove 2 on the welding of the current collecting plate 3 and the end wall 12 in the first sub-region 1A and the second sub-region 1B.

In some embodiments of the disclosure, L1 and L2 satisfy the following relationship:

$$8 \text{ mm} \leq \frac{1}{2} (L1+L2) \leq 10 \text{ mm}$$

, so that the entirety of the groove 2 is located in the first region 12A, and the groove 2 does not interfere with the welding of the end wall 12 and the current collecting plate 3 in the first sub-region 1A and/or the second sub-region 1B.

As illustrated in FIG. 4, in some embodiments of the disclosure, a vertical distance from the first surface 121 to the second surface 122 of the end wall 12 in the first direction X is defined as H, and H satisfies the following relationship: $0.3 \text{ mm} \leq H \leq 0.8 \text{ mm}$, so that the strength of the battery housing 100 meets general requirements for a battery. In can be understood that, when H is less than 0.3 mm, it may cause insufficient strength of the battery housing 100; and when H is greater than 0.8 mm, the overall thickness of the end wall 12 in the first direction X may be too thick, making it difficult for the battery 1000 to collapse at the end wall 12 and release the high-pressure gas inside the battery 1000.

As illustrated in FIG. 4, in some embodiments of the disclosure, the end wall 12 is in a circular shape. A diameter of the end wall 12 is defined as L6, and L6 satisfies the following relationship: $18.10 \text{ mm} \leq L6 \leq 21.40 \text{ mm}$. In the embodiments of the disclosure, size definitions for D, R, $\theta$, $\beta$, L1, and L2 of the groove 2 on the end wall 12 can be applied to a product using the battery 1000, which includes the battery housing 100 having the end wall 12 with the diameter of 18.10 mm to 21.40 mm, so as to avoid the explosion of the product using the battery 1000 during thermal runaway. In some embodiments of the disclosure, a material of the battery housing 100 is steel.

Referring to Table 1, the technical solutions and technical effects of the disclosure are described in detail according to the following examples.

Table 1

| | D (unit: mm) | θ (unit: °) | Pressure inside the battery housing when the battery collapses at the end wall (unit: MPa) |
|---|---|---|---|
| Example 1 | 0.033 | 58.91 | 2.215 |
| Example 2 | 0.033 | 55.92 | 2.187 |
| Example 3 | 0.036 | 61.56 | 2.232 |
| Example 4 | 0.039 | 57.06 | 2.172 |
| Example 5 | 0.039 | 56.47 | 2.437 |
| Example 6 | 0.04 | 54.83 | 2.32 |
| Example 7 | 0.041 | 51.83 | 1.967 |
| Example 8 | 0.042 | 56.03 | 2.472 |
| Example 9 | 0.043 | 57.3 | 1.972 |
| Example 10 | 0.046 | 55.96 | 2.395 |

(continued)

|  | D (unit: mm) | θ (unit: °) | Pressure inside the battery housing when the battery collapses at the end wall (unit: MPa) |
|---|---|---|---|
| Example 11 | 0.048 | 54.27 | 2.28 |
| Example 12 | 0.048 | 55.59 | 2.065 |
| Example 13 | 0.051 | 54.41 | 2.415 |
| Example 14 | 0.052 | 54.25 | 3.002 |
| Example 15 | 0.06 | 55.67 | 2.897 |
| Example 16 | 0.064 | 57.46 | 3.124 |
| Example 17 | 0.065 | 52.45 | 2.895 |
| Example 18 | 0.066 | 51.16 | 2.87 |
| Example 19 | 0.069 | 55.61 | 2.963 |
| Example 20 | 0.07 | 54.91 | 3.112 |
| Example 21 | 0.07 | 54.29 | 2.937 |
| Example 22 | 0.074 | 53.91 | 3.111 |
| Example 23 | 0.079 | 52.1 | 3.002 |

It can be seen from Table 1 that when D satisfies the following relationship: 0.03 mm ≤ D ≤ 0.08 mm, and θ satisfies the following relationship: 25° ≤ θ ≤ 65°, the groove 2 on the end wall 12 in the examples meets the design requirements for pressure relief by collapsing when the pressure at the end wall 12 is in a range of 1.90 MPa to 3.15 MPa. That is, when the pressure of the gas inside the battery 1000 was in the range of 1.90 MPa to 3.15 MPa, the battery 1000 collapsed at the end wall 12. Based on the above, pressure at two ends of the battery 1000 was released at the end wall 12 and the explosion-proof sheet 4 simultaneously, thereby avoiding the explosion of the battery housing 100, and improving the pressure relief performance of the battery 1000.

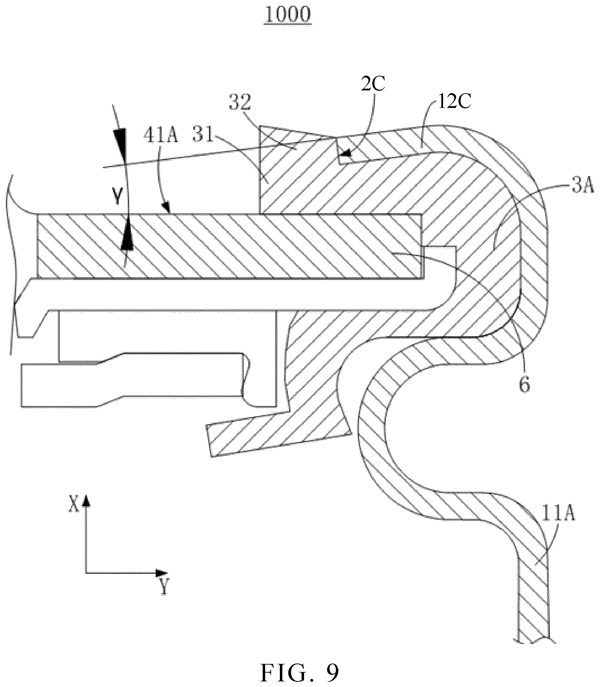

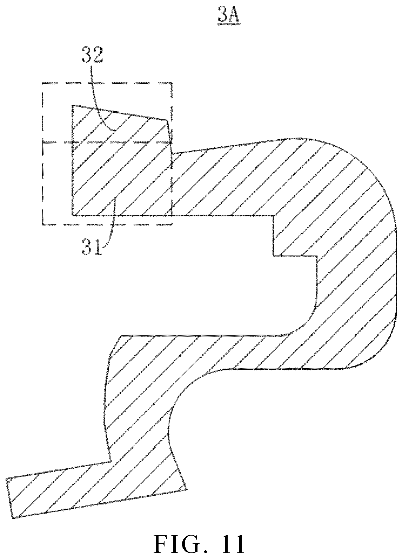

As illustrated in FIG. 9, FIG. 10, and FIG. 11, in some embodiments, the side wall 11 includes a main body portion 11A in a cylindrical shape and a port portion 12C connected to the main body portion 11A. The port portion 12C includes an end surface 2C away from the main body portion 11A. The cap assembly 200 includes the sealing member 3A, and the sealing member 3A includes an embedding portion 31 and a convex portion 32. The embedding portion 31 is formed by bending the port portion 12C towards an inner wall of the main body portion 11A to press the sealing member 3A. At least part of the end surface 2C is embedded into the embedding portion 31. The convex portion 32 is connected to the embedding portion 31, and the convex portion 32 covers a region of the end surface 2C not embedded into the embedding portion 31.

In the embodiments of the disclosure, the embedding portion 31 and the convex portion 32 cover and protect the end surface 2C of the port portion 12C without coating protection, avoiding the direct contact between the end surface 2C and air, thereby reducing the rusting risk at the end surface 2C.

It can be understood that, when the side wall 11 of the battery 1000 is bent, that is, when the port portion 12C is bent, the sealing member 3A and other components of the battery 1000 can be supported by the bent port portion 12C. In some embodiments of the disclosure, the sealing member 3A has a certain elastic deformation performance, and thus, when the port portion 12C presses the embedding portion 31, part of the embedding portion 31 close to the end surface 2C will shield part of the end surface 2C due to its own deformation, so as to shield the end surface 2C in combination with the convex portion 32 disposed on the embedding portion 31.

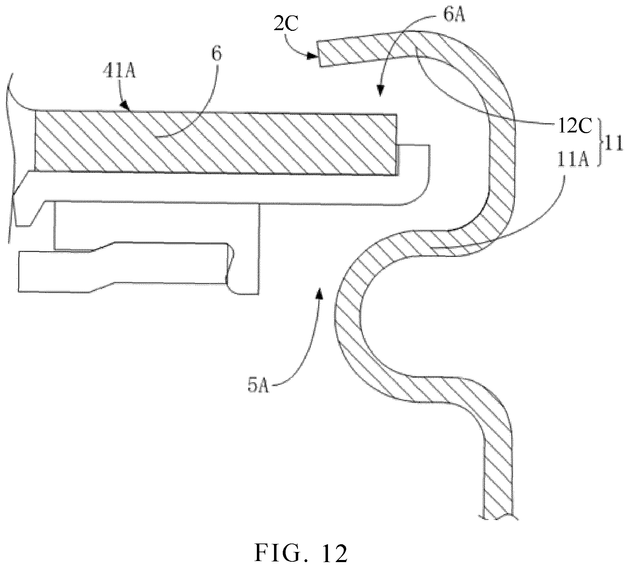

As illustrated in FIG. 9, FIG. 10, and FIG. 12, in some embodiments of the disclosure, the battery 1000 further includes a cap main body 6. The cap main body 6 is disposed in a cavity 5A of the main body portion 11A close to the port portion 12C. An edge of the cap main body 6 is separated from an inner wall of the main body portion 11A by a sealing region 6A. At least part of the sealing member 3A is disposed in the sealing region 6A. The sealing member 3A is in interference fit with the edge of the cap main body 6 and the inner wall of the main body portion 11A. Therefore, in the embodiments, the sealing member 3A can seal the gap between the cap main body 6 and the main body portion 11A in the sealing region 6A, so as to ensure the sealing performance of the sealing region 6A between the cap main body 6 and the main body portion 11A. Moreover, since the sealing member 3A is in interference fit with part of the cap main body 6 and part of the main body portion 11A, the sealing performance of the sealing region 6A can be further improved.

In some embodiments of the disclosure, the cap main body 6 includes a pressure-bearing surface 41A. The port portion 12C is bent towards the inner wall of the main body portion 11A and presses the sealing member 3A. The sealing member 3A abuts against the pressure-bearing surface 41A to form the embedding portion 31. Therefore, in the embodiments, part of the sealing member 3A located between the port portion 12C and the pressure-bearing surface 41A of the cap main body 6 is also in interference fit with the port portion 12C and the cap main body 6, so that part of the sealing member 3A located at the end surface 2C deforms to form the embedding portion 31.

As illustrated in FIG. 9, FIG. 11, and FIG. 12, in some embodiments of the disclosure, the port portion 12C extends obliquely in a direction close to the cap main body 6, so that a vertical distance from an end of the port portion 12C connected to the main body portion 11A in the second direction Y to the cap main body 6 in the first direction X is greater than a vertical distance from the end surface 2C to the cap main body 6 in the first direction X, thereby ensuring firmness of the fixation and sealing performance among the side wall 11, the cap main body 6, and the sealing member 3A.

As illustrated in FIG. 9, in some embodiments of the disclosure, an angle between a plane where the port portion 12C is located and a plane where the cap main body 6 is located is defined as $\gamma$, and $\gamma$ satisfies the following relationship: $4° \leq \gamma \leq 20°$. With this setting, when the port portion 12C presses the sealing member 3A, the embedding portion 31 can protect at least part of the end surface 2C. Moreover, the embedding portion 31 can also seal the gaps between the port portion 12C and the sealing member 3A, and between the sealing member 3A and the cap main body 6. In can be understood that, when $\gamma$ is less than 4°, it may cause poor sealing performance among the side wall 11, the sealing member 3A, and the cap main body 6; and when $\gamma$ is greater than 20°, the sealing member 3A disposed between the port portion 12C and the cap main body 6 will affect the bending of the port portion 12C, making the bending angle of the port portion 12C not too large. However, when the bending angle of the port portion 12C is too large, the sealing member 3A will be excessively pressed, causing the deformation of the sealing member 3A to exceed its elastic limit, thereby affecting the sealing performance of the side wall 11 and the cap main body 6.

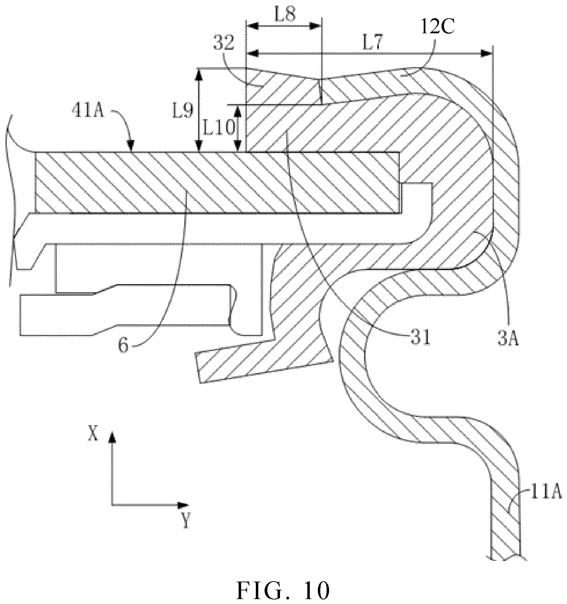

As illustrated in FIG. 10, in some embodiments of the disclosure, a length of part of the sealing member 3A located at a side of the pressure-bearing surface 41A in the second direction Y is defined as L7, a length of the embedding portion 31 in the second direction Y is defined as L8, and L7 and L8 satisfy the following relationship: $0.1L7 \leq L8 \leq 0.4L7$, so that the embedding portion 31 and the convex portion 32 cover the end surface 2C. It can be understood that, when L8 is greater than 0.4L7, part of the sealing member 3A may curl up, causing poor appearance of the sealing member 3A; and when L8 is less than 0.1L7, it will affect the rust-proof protection function of the embedding portion 31 and the convex portion 32 to the end surface 2C. That is, the embedding portion 31 and the convex portion 32 are prone to separate from the end surface 2C under the action of an external force.

As illustrated in FIG. 10, in some embodiments of the disclosure, a maximum vertical distance from a side of the convex portion 32 away from the cap main body 6 to the pressure-bearing surface 41A in the first direction X is defined as L9, and a minimum vertical distance from the end surface 2C to the pressure-bearing surface 41A in the first direction X is defined as L10, and L9 and L10 satisfy the following relationship: $0.6L9 \leq L10 \leq 0.9L9$, so that the embedding portion 31 and the convex portion 32 cover the end surface 2C. It can be understood that, when L10 is less than 0.6L9, part of the sealing member 3A may curl up, causing poor appearance of the sealing member 3A. When L10 is greater than 0.9L9, it will affect the rust-proof protection function of the embedding portion 31 and the convex portion 32 to the end surface 2C, that is, the convex portion 32 and the embedding portion 31 may not fully cover the end surface 2C.

In addition, in some embodiments of the disclosure, the battery 1000 further includes a rust remover disposed on the end surface 2C, so that the rust remover, all of the embedding portion 31 and the convex portion 32 can protect the end surface 2C, thereby enhancing the rust-proof protection to the end surface 2C.

For example, the rust remover can be a rust-proof oil, a rust-proof paint, a rust-proof adhesive, or the like. In some embodiments of the disclosure, the rust remover is the rust-proof oil.

Some embodiments of the disclosure further provide a battery module including a plurality of batteries, each of the batteries adapts the battery 1000 as described in any one of the above-mentioned embodiments. Since the battery module adopts the battery 1000 as described above, it has the beneficial effects brought by the battery 1000 as described in any one of the above-mentioned embodiments, which will not be repeated here.

**Claims**

1. A battery (1000), **characterized in that** the battery (1000) comprises:

   a battery housing (100) comprising a body (1), wherein the body (1) comprises a side wall (11) extending in a first direction and an end wall (12) connected to an end of the side wall (11); and
   a cap assembly (200) disposed at an end of the side wall (11) away from the end wall (12) and comprising an explosion-proof sheet (4), wherein the explosion-proof sheet (4) is disposed facing the end wall (12);
   wherein the end wall (12) comprises a first surface (121) and a second surface (122) opposite to each other in the first direction, and the first surface (121) faces the explosion-proof sheet (4); the end wall (12) is provided with a groove (2) on the second surface (122), and the groove (2) is recessed from the second surface (122) towards the first surface (121); and a vertical distance from a deepest point of the groove (2) to the first surface (121) in the first direction is defined as D, and D satisfies the following relationship: 0.03 mm ≤ D ≤ 0.08 mm.

2. The battery (1000) of claim 1, wherein the groove (2) is in an arc shape on the second surface (122); and the groove (2) comprises a first groove wall (21) and a second groove wall (22) disposed in a radial direction of a circle where the arc shape of the groove (2) is located, in a cross-sectional view of the battery (1000), both of the first groove wall (21) and the second groove wall (22) are inclined surfaces, and a plane where the first groove wall (21) is located intersects with a plane where the second groove wall (22) is located; and
an angle in the first direction between the plane where the first groove wall (21) is located and the plane where the second groove wall (22) is located is defined as θ, and θ satisfies the following relationship: 25° ≤ θ ≤ 65°.

3. The battery (1000) of claim 2, wherein the groove (2) further comprises a third groove wall (23) connecting the first groove wall (21) and the second groove wall (22), and the deepest point of the groove (2) is located on the third groove wall (23);

and in the cross-sectional view of the battery (1000), the third groove wall (23) is in a circular arc shape, and a circle center of a circle corresponding to the circular arc shape of the third groove wall (23) is in the groove (2); and a radius of the circle corresponding to the circular arc shape of the third groove wall (23) is defined as R, and R satisfies the following relationship: 0.05 mm ≤ R ≤ 0.1 mm.

4. The battery (1000) of any one of claims 1 to 3, wherein the groove (2) is in an arc shape on the second surface (122), an angle on the second surface (122) between two connecting lines respectively connecting two ends of the groove (2) and a circle center of a circle where the arc shape of the groove (2) is located is defined as β, and β satisfies the following relationship: 0° ≤ β ≤ 22°.

5. The battery (1000) of any one of claims 1 to 3, wherein the end wall (12) comprises a first region (12A) and a second region (12B), and the second region (12B) is configured to be welded with a current collecting plate (3); and the second region (12B) comprises a first sub-region (1A) and a second sub-region (1B), and the first region (12A) is located between the first sub-region (1A) and the second sub-region (1B); and
at least part of the groove (2) is disposed in the first region (12A).

6. The battery (1000) of claim 5, wherein the first sub-region (1A) is in a circular shape, and the second sub-region (1B) is in an annular shape;

the groove (2) is in an arc shape on the second surface (122), in a plan view of the end wall (12), the groove (2) comprises a first side (2A) and a second side (2B) oppositely disposed in a radial direction of a circle where the arc shape of the groove (2) is located, and both of the first side (2A) and the second side (2B) are in an arc shape; and a diameter of a circle where the arc shape of the first side (2A) is located is defined as L1, a diameter of a circle where the arc shape of the second side (2B) is located is defined as L2, a diameter of the first sub-region (1A) is defined as L3, and an inner diameter of the second sub-region (1B) is defined as L4, wherein L1, L2, L3, and L4

$$L3 \leq \frac{1}{2}(L1+L2) \leq L4$$

satisfy the following relationship:                    .

7. The battery (1000) of claim 6, wherein L1 and L2 satisfy the following relationship:

$$8\ mm \leq \frac{1}{2}(L1+L2) \leq 10\ mm$$ ;

optionally, L3 and L4 satisfy the following relationship: 2 mm ≤ L3 ≤ 6 mm, and L4 ≥ 12 mm.

8. The battery (1000) of any one of claims 1 to 3, wherein a vertical distance from the first surface (121) to the second surface (122) of the end wall (12) in the first direction is defined as H, and H satisfies the following relationship: 0.3 mm ≤ H ≤ 0.8 mm;

optionally, the end wall (12) is in a circular shape, a diameter of the end wall (12) is defined as L6, and L6 satisfies the following relationship: 18.10 mm ≤ L6 ≤ 21.40 mm;
optionally, when the battery (1000) collapses at the end wall (12), a pressure inside the battery housing (100) is defined as A, and A satisfies the following relationship: 1.90 MPa ≤ A ≤ 3.15 MPa.

9. The battery (1000) of claim 1, wherein the side wall (11) comprises a main body portion (11A) in a cylindrical shape and a port portion (12C) connected to the main body portion (11A), and the port portion (12C) comprises an end surface (2C) away from the main body portion (11A); and
the cap assembly (200) further comprises a sealing member (3A), wherein the sealing member (3A) comprises an embedding portion (31) and a convex portion (32), the embedding portion (31) is formed by bending the port portion (12C) towards an inner wall of the main body portion (11A) to press the sealing member (3A), and at least part of the end surface (2C) is embedded into the embedding portion (31); and the convex portion (32) is connected to the embedding portion (31) and covers a region of the end surface (2C) not embedded into the embedding portion (31).

10. The battery (1000) of claim 9, wherein the cap assembly (200) further comprises a cap main body (6), and the cap main body (6) is disposed in a cavity of the main body portion (11A) close to the port portion (12C); and
an edge of the cap main body (6) is separated from an inner wall of the main body portion (11A) by a sealing region (6A), at least part of the sealing member (3A) is disposed in the sealing region (6A), and the sealing member (3A) is in interference fit with the edge of the cap main body (6) and the inner wall of the main body portion (11A).

11. The battery (1000) of claim 10, wherein the cap main body (6) comprises a pressure-bearing surface (41A), the port portion (12C) is bent towards the inner wall of the main body portion (11A) and presses the sealing member (3A), and the sealing member (3A) abuts against the pressure-bearing surface (41A) to form the embedding portion (31);
optionally, the cap main body (6) comprises a pressure-bearing surface (41A), the port portion (12C) is bent towards the inner wall of the main body portion (11A) and presses the sealing member (3A), the sealing member (3A) abuts against the pressure-bearing surface (41A) to form the embedding portion (31), and the port portion (12C) extends obliquely in a direction close to the cap main body (6).

12. The battery (1000) of claim 11, wherein an angle between a plane where the port portion (12C) is located and a plane where the cap main body (6) is located is defined as $\gamma$, and $\gamma$ satisfies the following relationship: 4° ≤ $\gamma$ ≤ 20°;

optionally, a length of part of the sealing member (3A) at a side of the pressure-bearing surface (41A) in a second direction is defined as L7, a length of the embedding portion (31) in the second direction is defined as L8, and L7 and L8 satisfy the following relationship: 0.1L7 ≤ L8 ≤ 0.4L7;
optionally, a maximum vertical distance from a side of the convex portion (32) away from the cap main body (6) to the pressure-bearing surface (41A) in the first direction is defined as L9, a minimum vertical distance from the end surface (2C) to the pressure-bearing surface (41A) in the first direction is defined as L10, and L9 and L10 satisfy the following relationship: 0.6L9 ≤ L10 ≤ 0.9L9.

13. The battery (1000) of any one of claims 9 to 12, wherein the battery (1000) further comprises a rust remover disposed on the end surface (2C);
optionally, the battery (1000) further comprises a rust remover disposed on the end surface (2C), and the rust remover is a rust-removing oil.

14. The battery (1000) of any one of claims 1 to 13, wherein the explosion-proof sheet (4) is provided with a notch (5), and the notch (5) and the groove (2) are disposed facing each other in the first direction; and the notch (5) is in an arc shape on the explosion-proof sheet (4), an angle on the explosion-proof sheet (4) between two connecting lines respectively connecting two ends of the notch (5) and a circle center of a circle where the arc shape of the notch (5) is located is defined as $\alpha$, and $\alpha$ satisfies the following relationship: 0° ≤ $\alpha$ ≤ 22°.

15. A battery module comprising a plurality of batteries, **characterized in that** each of the plurality of batteries adapts the battery (1000) as claimed in any one of claims 1 to 14.

FIG. 1

200

6    4    5    3A

FIG. 2

FIG. 3

FIG. 4

FIG. 5

FIG. 6

FIG. 7

EP 4 576 346 A1

FIG. 8

16

FIG. 9

FIG. 10

FIG. 11

FIG. 12

Europäisches
Patentamt

European
Patent Office

Office européen
des brevets

# EUROPEAN SEARCH REPORT

**Application Number**

EP 24 20 7245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/132625 A1 (MIYATA KYOSUKE [JP] ET AL) 14 May 2015 (2015-05-14) | 1,8 | INV.<br>H01M50/107 |
| Y | * paragraphs [0028], [0036]; figures 2, 5 * <br>* paragraph [0026] - paragraph [0028] * <br>* paragraph [0036] * <br>----- | 2-7,9-15 | H01M50/152<br>H01M50/186<br>H01M50/342<br>H01M50/184 |
| Y | US 2020/243822 A1 (SODEYAMA KUNIO [JP] ET AL) 30 July 2020 (2020-07-30) <br>* paragraphs [0011], [0012], [0039], [0046], [0113] - [0115], [0149], [0150]; figures 1, 2 * <br>* paragraph [0011] - paragraph [0012] * <br>* paragraph [0037] * <br>* paragraph [0039] * <br>* paragraph [0046] * <br>* paragraph [0113] - paragraph [0115] * <br>* paragraph [0149] - paragraph [0150] * <br>* paragraph [0153] - paragraph [0154] * <br>* paragraph [0187] * <br>----- | 3 | |
| Y | EP 2 693 525 A1 (NIPPON STEEL & SUMITOMO METAL CORP [JP]) 5 February 2014 (2014-02-05) <br>* paragraph [0028] * <br>* paragraph [0028] * <br>* paragraph [0060] * <br>----- | 2,4-7,14,15 | TECHNICAL FIELDS SEARCHED (IPC) <br><br>H01M |
| A | WO 2021/117426 A1 (PANASONIC IP MAN CO LTD [JP]) 17 June 2021 (2021-06-17) <br>* the whole document * <br>----- | 14 | |
| Y | KR 2017 0085978 A (SHIN HEUNG ENERGY&ELECTRONIC CO LTD [KR]) 25 July 2017 (2017-07-25) <br>* paragraph [0032] * <br>* figures 7, 8 * <br>----- | 9-13 | |

-/--

The present search report has been drawn up for all claims

| Place of search | Date of completion of the search | Examiner |
|---|---|---|
| Munich | 13 May 2025 | Radinger, Hannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 24 20 7245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 696 387 B1 (SAMSUNG SDI CO LTD [KR]) 27 September 2017 (2017-09-27) * the whole document * ----- | 1-15 | |

TECHNICAL FIELDS
SEARCHED       (IPC)

The present search report has been drawn up for all claims

| Place of search | Date of completion of the search | Examiner |
|---|---|---|
| Munich | 13 May 2025 | Radinger, Hannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................................................
& : member of the same patent family, corresponding document

EPO FORM 1503 03.82 (P04C01)

Europäisches
Patentamt

European
Patent Office

Office européen
des brevets

**Application Number**

EP 24 20 7245

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

[X] All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

The Search Division considers that the present European patent application does not comply with the requirements of unity of invention and relates to several inventions or groups of inventions, namely:

   1. claims: 2-8, 14, 15(completely); 1(partially)

        Housing end wall
                        ---

   2. claims: 9-13(completely); 1(partially)

        Cap assembly
                        ---

## ANNEX TO THE EUROPEAN SEARCH REPORT
## ON EUROPEAN PATENT APPLICATION NO.

EP 24 20 7245

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | Publication date |
|---|---|---|---|
| US 2015132625 A1 | 14-05-2015 | CN 104126238 A | 29-10-2014 |
| | | JP 5737481 B2 | 17-06-2015 |
| | | JP 2015135822 A | 27-07-2015 |
| | | JP WO2014045569 A1 | 18-08-2016 |
| | | US 2015132625 A1 | 14-05-2015 |
| | | WO 2014045569 A1 | 27-03-2014 |
| US 2020243822 A1 | 30-07-2020 | CN 107949927 A | 20-04-2018 |
| | | JP 6569735 B2 | 04-09-2019 |
| | | JP WO2017043023 A1 | 28-06-2018 |
| | | US 2020243822 A1 | 30-07-2020 |
| | | WO 2017043023 A1 | 16-03-2017 |
| EP 2693525 A1 | 05-02-2014 | CN 103443962 A | 11-12-2013 |
| | | EP 2693525 A1 | 05-02-2014 |
| | | JP 5170352 B2 | 27-03-2013 |
| | | JP WO2012153675 A1 | 31-07-2014 |
| | | KR 20130112070 A | 11-10-2013 |
| | | US 2014072841 A1 | 13-03-2014 |
| | | WO 2012153675 A1 | 15-11-2012 |
| WO 2021117426 A1 | 17-06-2021 | CN 114762180 A | 15-07-2022 |
| | | JP 7308469 B2 | 14-07-2023 |
| | | JP WO2021117426 A1 | 17-06-2021 |
| | | US 2023027470 A1 | 26-01-2023 |
| | | WO 2021117426 A1 | 17-06-2021 |
| KR 20170085978 A | 25-07-2017 | NONE | |
| EP 2696387 B1 | 27-09-2017 | CN 103579535 A | 12-02-2014 |
| | | EP 2696387 A1 | 12-02-2014 |
| | | JP 6178064 B2 | 09-08-2017 |
| | | JP 2014036014 A | 24-02-2014 |
| | | KR 20140020482 A | 19-02-2014 |
| | | US 2014045000 A1 | 13-02-2014 |

EPO FORM P0459

For more details about this annex : see Official Journal of the European Patent Office, No. 12/82